# EUROPEAN PATENT SPECIFICATION

(11) **EP 1 186 845 B1**
(45) Date of publication and mention of the grant of the patent: **25.08.2004**
(21) Application number: 00119828.2
(22) Date of filing: 12.09.2000
(51) Int. Cl.: F28D 20/00, F28D 1/03

(54) **Fluid-circulating heat exchanger**
Wärmetauscher mit Flüssigkeitsumlauf
Echangeur de chaleur avec circulation de fluide

(43) Date of publication of application: 13.03.2002
(73) Proprietor: C.G.A. COMPAGNIA GENERALE ALLUMINIO S.p.A., I-33043 Cividale del Friuli (IT)
(72) Inventor: Schiassi, Renzo, 33043 Cividale del Friuli (UD) (IT); Gentilcore, Fabio, 33043 Cividale del Friuli (UD) (IT)
(74) Representative: D'Agostini, Giovanni, Dr.

(56) References cited:
- FR-A- 2 337 319
- US-A- 5 896 914

## Description

The object of this invention is a circulating fluid-type heat exchanger.

### Application field

The invention is applied to the central heating and air conditioning sectors, for indoor environments such as homes or offices.

### State of the art

Circulating fluid-type heat exchange units for indoor environments is well known.

Heat exchangers, for example in the domestic central heating sector, are also known as radiators.

They used to be made out of cast iron, resulting in an item that was very heavy and very expensive.

Recently, heat exchange panels made out of two steel sheets have been adopted. In this case, one of the sheets is flat while the other is shaped. The two sheets are welded together to form a channeling system, after which they are boxed-in to facilitate convection motions.

Other solutions foresee the use of tubular elements made out of extruded aluminum, preferably with fins to help with the heat exchange. FR2337319A discloses a solar energy accumulator substantially for a thermal stocking or heat stocking (heat accumulator) and not for environmental-external heat exchange. Said heat accumulator is in a form of panel having three volumes, one central volume as heat accumulator filled with heat accumulating substance, portioned with a separating wall, and two side exchanger volumes, between said central volume (5) and said external insulating panels (8,9). The central volume is a central chamber that contains in close condition between undulated walls, a liquid heat accumulator (5), end wherein between said undulated walls and said external insulating panels a first heat exchanger fluid circulation is realized (10,12) on one side and a second heat exchanger fluid circulation is realized (11,13) on the other side. An exchange pipe means (15) passing through said central liquid accumulator volume (5) to release heat, captured by an external solar energy capture means (14). This disclosure being introduced even if regards the stocking or accumulating panels and not heat exchange panels.

### Drawbacks

These types of panels have various functional, structural or constructive drawbacks.

Examples of these drawbacks are the following:
- radiators made out of cast iron carry out the heat exchange with good thermal inertia, but are very heavy, expensive and not very ecological;
- radiators made out of steel sheets corrode very quickly which leads to a limited working life. Furthermore, they are heavy, although not as heavy as cast iron radiators, and are also expensive to make;
- radiators made out of aluminium profiles with fins are also expensive to make, and require assembly of the elements that may lead to leakage between the panels;
- radiators made out of steel or aluminium, carry out the heat exchange with low thermal inertia.
Pertinent to this invention is the US-A-5896914 that discloses a Heater for use in a room of a dwelling, preferably with a convention surface (3) and, in the case, for example, of a hot water heater, with a water tank with an inlet and an outlet aperture. To obtain a design more advantageous concerning the use, the heater has a separate closed storage chamber (7) containing a latent heat storage medium (8), the storage chamber (7) being heatable by radiation, convention or electrically.

### The aim of the invention

The aim of the invention herein described is to overcome the aforementioned problems, and to produce a heat exchanger that has a storage chamber containing a latent heat storage medium (8) as per US-A-5896914 in order to perform the highest efficiency possible, is easily manufactured at a reasonable cost, is made out of recyclable, non-polluting materials and that can be blended in with various environments.

### Essence of the invention

The aforementioned problems are resolved with the features of claim 1.

It is beneficial that the radiator with circulating fluid for the heat exchange is made out of panels of three layers of aluminium sheet, also known as triple-layered, which are produced according to the production process known as "Roll-Bond", which will be described further on.

It is also beneficial that the triple-layered panels are made in order to have a channelling system on one side, while on the other side there is a pocket that contains said diathermic liquid, preferably oil.

In this way, the heat is accumulated in the heat exchanger thus improving the heat exchange efficiency. Furthermore, the period of time in which heat exchange is carried out is longer than the period of time in which the heating fluid circulates.

A further advantage is that the triple-layered panel has a channelling system on one side for the heat exchange circuit, while on the other side there is a channelling system for the circulation of air to improve the convention motions.

Groups of these panels may be built up into batteries, according to requirements.

The new panel therefore, includes two sheets fitted and welded together face to face. At least one of the sheets is shaped in order to form a channelling system, with an inlet and an outlet for the flow of the liquid for the heat exchange, when they are fitted together. Another sheet is then added to these two sheets in order to form a triple-layered panel with a heat accumulation pocket or a channelling system to convey air.

In this way, a pocket that holds a liquid for heat accumulation, such as diathermic oil or water, is formed. The said sheets are made of aluminium and are welded together by using the roll-welding technique in the presence of temperature and/or pressure and/or ultrasounds.

The following advantages are achieved:
- radiators produced out of aluminium sheets at a very low cost with the proven, widely used automatic process known as "roll-bond", or a similar method;
- the manufacture of a radiator that acts, not only as a heat exchanger, but which also holds the heat accumulated by the fluid for the heat exchange as a reserve, which leads to an increase in the time in which heat exchange is carried out with the surrounding air, thus improving the overall efficiency;
- aluminium is employed, which is a better heat conductor than steel, to further improve the exchange efficiency;
- it is beneficial that packs of these panels can be built up with other triple-layered aluminium panels placed between them, and in which two of the sheets make up the channelling system for the circulating fluid for the heat exchange, while a third sheet creates a channelling system above and below the other two sheets to convey the surrounding air with a chimney effect.

In this way, there is the added advantage of further improving the efficiency of the heat exchange between the air and the liquid.

Either one or both of the sheets that are fitted together to create the channelling system for the circulating heat exchange liquid can be shaped.

The advantages can be summed up as follows:
- excellent thermal conductivity;
- the possibility of building up batteries out of standard elements that can be placed in parallel according to design requirements;
- a product that is made of aluminium that can be completely recycled;
- a product that is light for easy installation, and that can be fitted to any pre-existing system due to its compact dimensions;
- production costs are much lower than those for the manufacture of conventional radiators;
- if required, the panel can be personalised according to taste by modifying the shape of the heat exchange channelling system;
- reduction in consumption due to the pocket filled with diathermic oil, and the channelling system for the air;
- the product can be used as an item of furnishing, without losing any of its functional characteristics;
- problems associated with thermal expansion are irrelevant;
- a light product due to the use of aluminium components;
- a heat exchanger, therefore, with a multifunction, integrated circuit that occupies a minimum amount of space;
- a thin shape with minimum thickness;
- ideal for architectonic designs and made-to-measure environments;
- a large range of dimensions can be easily made at a low cost, even for small lots;
- the surface finish can be varied, for example with embossing, anodising or painting.

### Description of a typical means of applying the system

These and other advantages, with the aid of the attached drawings, will be outlined in the following description of a typical application of the system, although it is not to be considered exhaustive but merely a typical example.

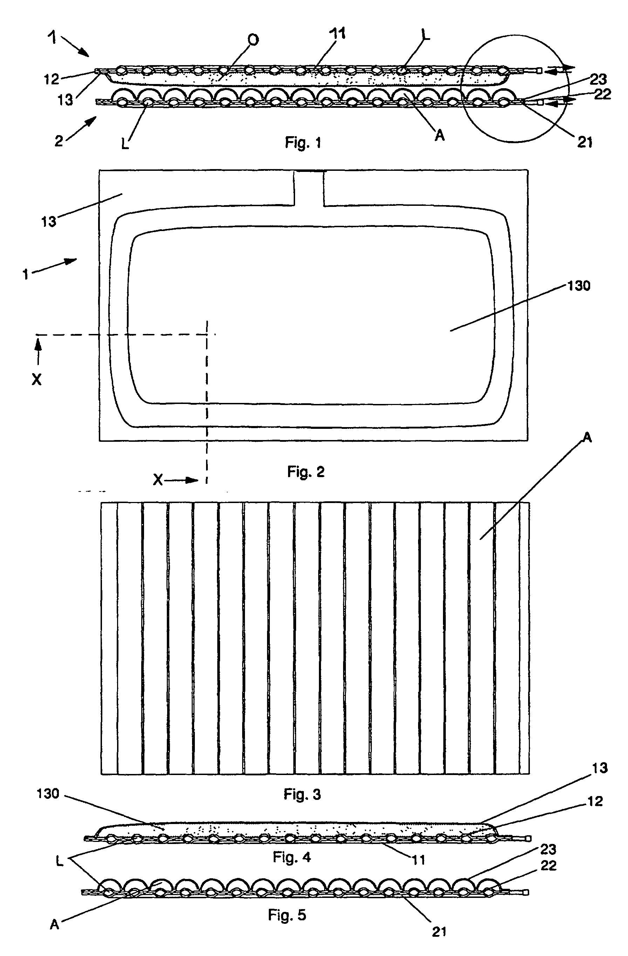

Figure 1 is a sectional view of a radiator made up of two triple-layered panels. One of the panels has a diathermic pocket, while the other has conveyor channels for the air, and in which two shaped sheets create the channelling system for the circulating water for the heat exchange.

Figure 2 is a front view of the panel from the side with the pocket for the diathermic oil.

Figure 3 is a front view of the panel from the side with the channelling system for conveying the air.

Figure 4 is a sectional view of a radiator with only a triple-layered panel with diathermic oil.

Figure 5 is a sectional view of a radiator with only a triple-layered panel with a channelling system for conveying the air.

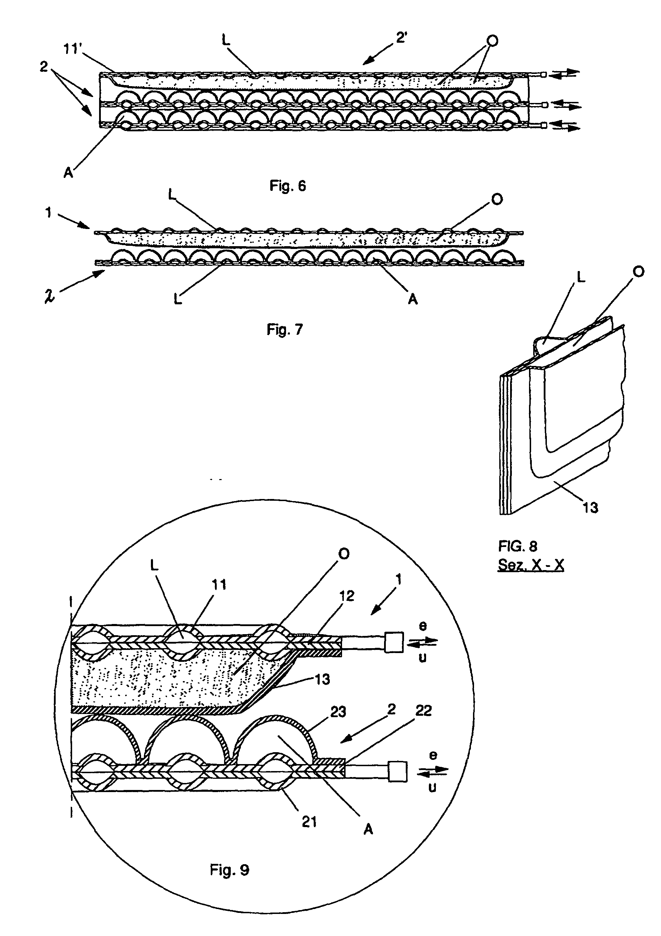

Figure 6 is a sectional view of another radiator made of three triple-layered panels. Two of the panels have a channelling system for conveying the air, while the third panel has a pocket for the diathermic oil. This panel has only the inner sheet of the heat exchange channelling system shaped, while the outer sheet is flat (the opposite set-up is, obviously, possible).

Figure 7 is a sectional view of another radiator made of two triple-layered panels. One of the panels forms the pocket for the diathermic oil, while the other panel is a modified version of a panel with a channelling system for conveying the air.

Figure 8 is a three-dimensional sectional view of a portion of the pocket for the diathermic oil of the triple-layered panel.

Figure 9 is an enlarged detailed sectional view of a portion of the radiator shown in fig. 1.

In reference to the aforementioned figures, the following items are indicated:
- "L" indicates the channelling system for the circulating liquid for the heat exchange (hot water or another liquid or fluid);
- "O" indicates the pocket that contains the diathermic liquid (oil or another liquid, e.g. water);
- "A" indicates the open channelling system for conveying the air;
- the welds between the sheets (11, 12, 13) of the triple-layered panels (1, 2) are carried out with the "Roll-Bond" (roll-welding) technique which will be explained in detail later;
- the formation of the channelling system for the circulating water for the heat exchange "L" is created from joining the aluminium sheets 11-12. Either one or both of the sheets may be shaped (e.g. flat sheet 11') and have an inlet and an outlet (e-u);
- the shape of the pocket for the diathermic oil (O) is obtained by contemporarily joining another layer of sheet or plate (13). There may be only one pocket over the surface, or a number of pockets;
- as an alternative to the pocket (O), a channelling system for the air can be created (A);
- the execution details may, nevertheless, vary.

The use of the heat exchangers is not limited to heating systems, and they can obviously be used for cooling in air-conditioning systems for closed environments. The liquid for the heat exchange may even be any fluid, not excluding changes of state as in refrigeration circuits or heat pumps.

It is beneficial that the welding between the three "Roll-Bond" sheets, as claimed, is carried out with the following process:
- preparation of screen-print negatives for the circuit for the heat exchange liquid (L), the pocket (O) and the channelling systems for conveying the air (A);
- cutting to final size of the sheets for the panels (1, 2, ...) to obtain the various squares, layers or sheets (11, 12, 13) that make up the panel (1, 2, ...);
- with the aid of a silk-screen printer:

- stamping of both sides of the intermediate sheet (12) with the designs required (e.g. design of the heat exchange circuit "L" on one side and the design of the pocket "O" or the channelling system for conveying the air "A" on the other side);
- together with two other sheets, a sandwich is made out of three sheets (11, 12, 13) to form the triple-layered panel (1,2);
- heating of the triple-layer panels (1,2) in an oven;
- hot-rolling of the triple-layered panels (1, 2) to form a weld between the surfaces that are in contact with each other, and not covered by the silk-screen print;
- cold-rolling of the triple-layered panels (1, 2), with plastic deformation to the correct size to obtain a perfect weld;
- annealing of the triple-layered panels (1, 2) in order to homogenise the panels thus obtained;
- inflation of the said panels (1, 2) by injecting compressed air between the sheets (11-12 and 12-13) to detach the parts that are not welded. These parts correspond to the designs of the channelling systems (L, A) and pockets (O). By forcing the surfaces that are not stuck together to come apart with the use of a carefully controlled inflation of the sheets (11, 12, 13), the desired channelling systems and pockets are obtained;
- squaring-off of the panels (1, 2, ...);
- welding on the pipes that are used for the inlet and outlet of the circuit (e, u);
- painting or anodising of the panels;
- filling the pockets (O) with diathermic fluid for heat accumulation;
- assembly of the panels 1, 2, ... to obtain the finished radiator.
- In the above solutions, triple-layered panels have been described. Simple twin-layered sheets that alternate between heat exchange circulation channels and accumulation pockets can also be made.
- Other solutions with multi-layers with more than three sheets can also be provided.

## Claims

1. A fluid-circulating heat exchanger having at least one heat-exchange fluid circulation channelling system and at least one conductive chamber containing a substance for heat accumulation (O) and comprising:
at least a first panel having a first sheet (11) and a second sheet (12) face-to-face fitted and welded together, and in which at least one of the sheets is shaped so that, when the sheets are fitted and welded together, a channelling system for the heat-exchange fluid circulation (L) is allowed by an inlet and an outlet (e, u), and
a third sheet (13) welded to the said first and second sheets (11, 12) in order to create two chambers, wherein at least one of said three sheets is a divider (12) of said chambers, and wherein one of the said chambers is said heat-exchange fluid circulating channeling system (L) and the other is said conductive chamber containing said substance of heat accumulation;
and at least a second panel comprising:
a first sheet (23) and a second sheet (22) face-to-face fitted and welded together, and in which at least one of the sheets is shaped so that, when the sheets are fitted and welded together, a heat exchange fluid circulation channeling system of the open-type is created to allow air circulation (A) and
a third sheet (21) welded to the said first and second sheets (23, 22) in order to create two chambers, wherein at least one of said three sheets is a divider (22) of said chambers, and wherein one of the said chambers is said heat-exchange circulating channeling system of the open type to allow air circulation (A) and the other is a heat exchange fluid circulation channeling system (L).

2. A heat exchanger according to claim 1, **characterised by** the fact that the substance for heat accumulation of said conductive chamber is a diathermic liquid and said conductive chamber is of a closed-type (O).

3. A heat exchanger as claimed in previous claim, **characterised in that** the said diathermic liquid is diathermic oil (O).

4. A heat exchanger according to claim 1, **characterised in that** the said sheets are made of aluminium and welded together by means of roll-welding in the presence of heat and/or pressure and/or ultrasounds.

5. A heat exchanger system using heat exchangers according to claim 1, **characterised in that** is made up of a first panel and several of second panels.

## Patentansprüche

1. Wärmetauscher mit umlaufender Flüssigkeit mit mindestens einem Wärmetausch-Flüssigkeitsumlauf-Kanalisierungssystem und mindestens einer leitenden Kammer, die eine Substanz zur Wärmespeicherung (O) enthält, und mit:
mindestens einer ersten Platte mit einem ersten Blech (11) und einem zweites Blech (12), die Seite an Seite eingepasst und zusammengeschweißt sind, und wobei mindestens eins der Bleche derart geformt ist, dass, wenn die Bleche eingepasst und zusammengeschweißt werden, ein Kanalisierungssystem für den Wärmetausch-Flüssigkeitsumlauf (L) durch einen Einlass und einen Auslass (e, u) zugelassen wird, und
ein drittes Blech (13), das an das erste und das zweite Blech (11, 12) geschweißt ist, um zwei Kammern zu schaffen, wobei mindestens eines von besagten drei Blechen eine Teilwand (12) der Kammern ist, und
wobei eine der Kammern besagtes Wärmetausch-Kanalisierungssystem mit Flüssigkeitsumlauf (L) ist und die andere die leitende Kammer ist, die die Wärmespeicherungssubstanz enthält;
und mindestens eine zweite Platte mit:
einem ersten Blech (23) und einem zweiten Blech (22), die Seite an Seite eingepasst und zusammengeschweißt sind, und wobei mindestens eins der Bleche derart geformt ist, dass, wenn die Bleche eingepasst und zusammengeschweißt sind, ein offenes Wärmeaustausch-Flüssigkeitsumlauf-Kanalisierungssystem zwecks Umluft (A) entsteht, und
einem dritten Blech (21), das an das erste und das zweite Blech (23, 22) geschweißt ist, um zwei Kammern zu schaffen, wobei mindestens eines der drei Bleche eine Teilwand (22) der Kammern ist, und wobei die eine der Kammern das offene Wärmetausch-Umlauf-Kanalisierungssystem zwecks Umluft (A) ist und die andere ein Wärmeaustausch-Flüssigkeitsumlauf-Kanalisierungssystem (L) ist.

2. Wärmetauscher nach Anspruch 1, **dadurch gekennzeichnet dass** die Substanz zur Wärmespeicherung der leitenden Kammer eine diathermische Flüssigkeit ist und die leitende Kammer des geschlossenen Typs ist (O).

3. Wärmetauscher wie nach dem vorherigen Anspruch, **gekennzeichnet dadurch, dass** die diathermische Flüssigkeit diathermisches Öl ist (O).

4. Wärmetauscher nach Anspruch 1, **gekennzeichnet dadurch, dass** die Bleche aus Aluminium sind und zusammengeschweißt mittels Walzschweißen unter Hitze und/oder Druck und/oder Ultraschall.

5. Ein Wärmetauschersystem mit Verwendung von Wärmetauschern nach Anspruch 1, **gekennzeichnet dadurch, dass** es aus einer ersten Platte und mehreren zweiten Platten besteht.

## Revendications

1. Un échangeur de chaleur avec circulation de fluide ayant au moins un système de canalisation pour la circulation de fluide d'échange de chaleur et au moins une chambre conductrice contenant une substance pour l'accumulation de chaleur (O) et comprenant :
au moins un premier panneau ayant une première tôle (11) et une deuxième tôle (12) placées face à face et soudées ensemble, et où au moins l'une des tôles est formée de telle manière que, quand les tôles sont ajustées et soudées ensemble, un système de canalisation pour la circulation de fluide d'échange de chaleur (L) est possible par une entrée et une sortie (e, u), et une troisième tôle (13) soudée auxdites première et deuxième tôles (11, 12) afin de créer deux chambres, où au moins l'une desdites trois tôles est un élément diviseur (12) desdites chambres, et où l'une desdites chambres est ledit système de canalisation pour la circulation de fluide d'échange de chaleur (L) et l'autre est ladite chambre conductrice contenant ladite substance d'accumulation de chaleur;
et au moins un deuxième panneau comprenant :
une première tôle (23) et une deuxième tôle (22) placées face à face et soudées ensemble, et où au moins l'une des tôles est formée de telle manière que, quand les tôles sont ajustées et soudées ensemble, un système de canalisation pour la circulation de fluide d'échange de chaleur de type ouvert est créé afin de permettre la circulation d'air (A) et
une troisième tôle (21) soudée auxdites première et deuxième tôles (23, 22) afin de créer deux chambres, où au moins l'une desdites trois tôles est un élément diviseur (22) desdites chambres, et où l'une desdites chambres est ledit système de canalisation pour la circulation d'échange de chaleur de type ouvert afin de permettre la circulation d'air (A) et l'autre est un système de canalisation pour la circulation de fluide d'échange de chaleur (L).

2. Un échangeur de chaleur selon la revendication 1, **caractérisé par le fait que** la substance pour l'accumulation de chaleur de ladite chambre conductrice est un liquide diathermique et ladite chambre conductrice est de type fermé (O).

3. Un échangeur de chaleur comme revendiqué dans la revendication précédente, **caractérisé en ce que** ledit liquide diathermique est de l'huile diathermique (O).

4. Un échangeur de chaleur selon la revendication 1, **caractérisé en ce que** lesdites tôles sont composées d'aluminium et soudées ensemble par laminage en présence de chaleur et/ou pression et/ou ultrasons.

5. Un système d'échangeur de chaleur utilisant des échangeurs thermiques selon la revendication 1, **caractérisé en ce qu'**il est composé d'un premier panneau et de plusieurs autres panneaux.
